# FASCICULE DE BREVET EUROPEEN

(11) **EP 0 546 927 B1**
(45) Date de publication et mention de la délivrance du brevet: **19.03.1997**
(21) Numéro de dépôt: 92403325.1
(22) Date de dépôt: 08.12.1992
(51) Int. Cl.: B60T 7/08

(54) **Dispositif de commande à main d'un frein de stationnement d'un véhicule**
Handbremshebel für eine Parkbremse
Hand brake lever for a parking brake

(30) Priorité: 12.12.1991 FR 9115447
(43) Date de publication de la demande: 16.06.1993
(73) Titulaire: AUTOMOBILES PEUGEOT, 75116 Paris (FR); AUTOMOBILES CITROEN, 92200 Neuilly-sur-Seine (FR)
(72) Inventeur: Anger, Gérard, F-78480 Verneuil/Seine (FR)
(74) Mandataire: Thinat, Michel

(56) Documents cités:
- AU-B- 443 613
- DE-A- 1 755 911
- FR-A- 2 207 822
- GB-A- 2 244 117

## Description

La présente invention concerne un dispositif de commande à main d'un frein de stationnement de véhicule.

On connaît de tels dispositif de commande possédant un mécanisme permettant le rabattement du levier de frein à main de façon à autoriser la rotation d'un siège conducteur ou passager en position active de serrage du frein tout en réduisant l'encombrement de ce dispositif.

Cependant, ces dispositifs connus ont pour inconvénient que le levier de manoeuvre du frein à main retombe systématiquement en position basse, que le frein soit serré ou non, amenant ainsi le conducteur à douter sur l'état réel du dispositif de commande.

DE-A-1 755 911 décrit un dispositif de commande à main d'un frein de stationnement d'un véhicule comprenant les caractéristiques énoncées dans le préambule de la revendication 1.

Selon ce document antérieur, le levier de manoeuvre est en deux parties s'articulant sur un autre axe que celui du levier de traction, ce qui entraîne une complication de fabrication, une moindre fiabilité et un risque de pincement, par exemple d'une partie de vêtement de l'utilisateur, entre les deux parties du levier de manoeuvre lors de l'actionnement de celui-ci dans le sens du serrage du frein.

AU-A-443 613 décrit également un dispositif de commande à main d'un frein de stationnement d'un véhicule ayant les mêmes inconvénients que le dispositif du document DE-A-1 755 911.

La présente invention a pour but d'éliminer les inconvénients ci-dessus des dispositifs connus en proposant un dispositif de commande à main d'un frein de stationnement d'un véhicule comprenant les caractéristiques de la partie caractérisante de la revendication 1.

Les moyens de butée précités comprennent un axe solidaire du levier de traction et portant le cliquet d'arrêt et une lumière curviligne du levier de manoeuvre traversée par l'axe de butée de façon que ce dernier soit en butée sur une extrémité ou fond de la lumière lors du pivotement du levier de manoeuvre vers sa position haute active précitée, la lumière permettant de plus le pivotement du levier de manoeuvre relativement au levier de traction vers sa position rabattue lorsque le levier de traction est en position active de serrage du frein.

La tige coulissante précitée comprend un épaulement venant en appui sur une butée fixe du levier de manoeuvre sous l'action du ressort de rappel précité en position rabattue du levier de manoeuvre.

Les deux leviers de manoeuvre et de traction pivotent autour d'un axe fixe commun.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
La figure 1 représente le dispositif de commande de l'invention en position de desserrage du frein d'un véhicule.
La figure 2 représente le dispositif de commande en position de serrage du frein.
La figure 3 représente partiellement le dispositif de commande en une position à laquelle le levier de manoeuvre est désolidarisé du levier de traction pour amener le levier de manoeuvre en position rabattue.
La figure 4 représente le dispositif de commande en position de serrage du frein et en position rabattue du levier de manoeuvre.

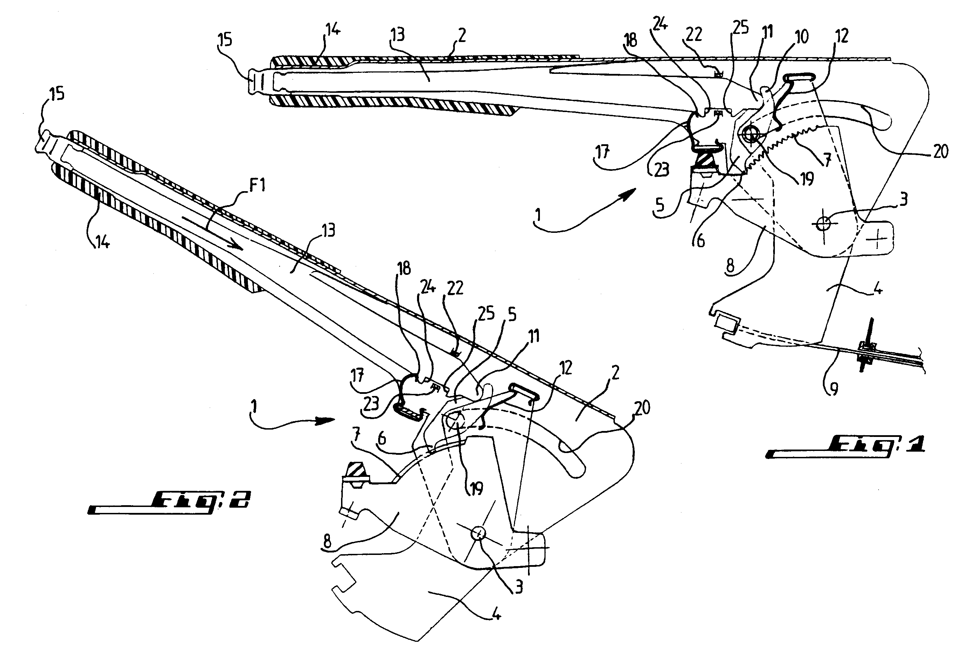

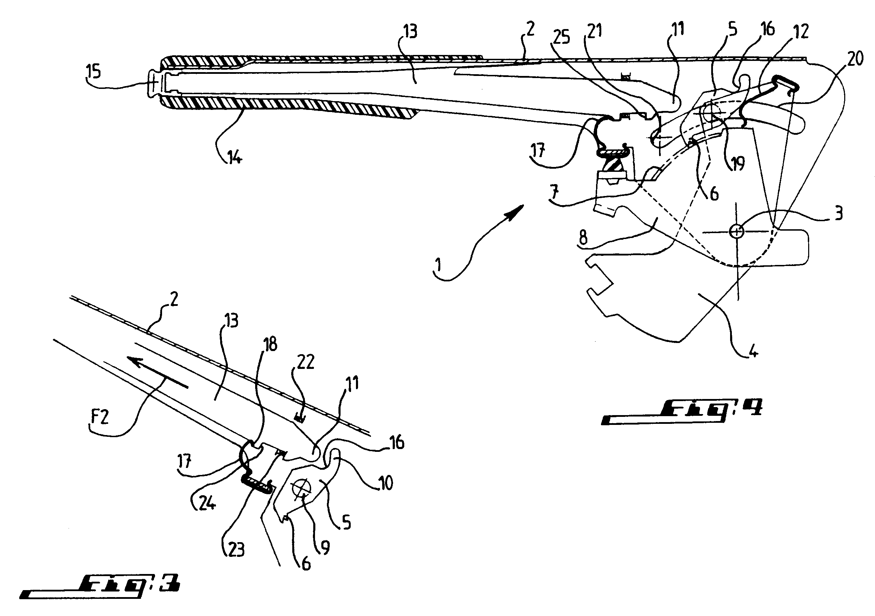

En se reportant aux figures, le dispositif de commande à main 1 d'un frein de stationnement (non représenté) d'un véhicule automobile est du type comprenant un levier de manoeuvre 2 pouvant pivoter autour d'un axe fixe 3 d'une position basse de desserrage du frein représentée en figure 1 à une position haute de serrage du frein représentée en figure 2. En pivotant de la position basse à la position haute, le levier de manoeuvre 2 entraîne, par des moyens de butée qui seront définis ultérieurement, un levier de traction 4 lié au frein d'une position de repos représentée en figure 1 à une position active de serrage du frein représentée en figure 2 où le levier de traction 4 est immobilisé par un cliquet d'arrêt 5 comprenant une partie inférieure à denture 6 s'engageant sur un secteur denté 7 réalisé sur une plaque 8 fixée au plancher du véhicule. Le levier de traction 4 a sa partie inférieure reliée à un câble de traction 9 représenté uniquement en figure 1 lui-même relié au frein du véhicule. Le cliquet d'arrêt 5 comporte une tête 10 s'appliquant sur l'extrémité 11 d'une tige d'actionnement 13 montée coulissante dans le levier de manoeuvre 2 et est maintenu en position d'engagement sur le secteur denté fixé 7 par un ressort à lame 12. Le levier de manoeuvre 2 comporte une poignée 14 et la tige coulissante 13 comporte un bouton de déclenchement 15 qui peut être enfoncé manuellement de façon que la tige coulisse suivant la flèche F1 et agisse par son extrémité 11 sur le cliquet d'arrêt 5 pour le désengager ou le décrocher du secteur denté fixe 7 et permettre ainsi le pivotement du levier de traction 4 autour de l'axe 3 à sa position de desserrage du frein.

Le dispositif de commande est également agencé pour amener le levier de manoeuvre 2 en une position rabattue sans desserrer le frein.

A cet effet, et selon l'invention, le dispositif de commande comprend des moyens éclipsables de solidarisation des deux leviers de manoeuvre 2 et de traction 4. Ces moyens éclipsables sont constitués par l'extrémité 11 en forme de doigt de la tige coulissante 13 et une encoche 16 réalisée dans la tête 10 du cliquet d'arrêt 5 et dans laquelle s'engage le doigt 11. Ce dernier est normalement maintenu dans l'encoche 16 par un ressort à lame curviligne 17 monté dans le levier de manoeuvre 2 et ayant son extrémité libre en appui sur un épaulement 18 de la tige 13 de façon à pousser cette dernière suivant la flèche F1.

Les moyens de butée comprennent un axe 19 solidaire du levier de traction 4 et portant de façon pivotante le cliquet d'arrêt 5, et une lumière curviligne 20 du levier de manoeuvre 2 à travers laquelle passe l'axe de butée 19 de façon que ce dernier soit constamment en butée sur une extrémité ou fond 21 de la lumière 20 lors du pivotement du levier de manoeuvre 2 de sa position basse de desserrage du frein à sa position haute de serrage du frein. La lumière forme un arc de cercle centré sur l'axe 3 de manière à permettre un pivotement relatif entre les deux leviers, l'axe 19 coulissant alors dans la lumière.

Les deux leviers de manoeuvre 2 et de traction 4 sont montés pivotant autour de l'axe fixe commun 3.

Pour assurer un engagement correct du doigt 11 de la tige 13 dans l'encoche 16, la tige 13 est guidée par deux ergots ou butées 22, 23 solidaires du levier de manoeuvre 2 et situées de part et d'autre de la tige 13 ; la butée 22 est prévue entre deux épaulements opposés 24 et 25 de la tige 13 de façon à limiter la course de la tige 13 comme cela sera expliqué ci-dessous.

Le fonctionnement du dispositif de commande ressort déjà de la description qui en a été faite ci-dessus et va être maintenant expliqué.

Pour serrer le frein du véhicule, le conducteur enfonce le bouton de déclenchement 15 de façon à provoquer la libération du cliquet 5 du secteur denté fixe 7 et exerce une pression dirigée vers le haut sur le levier de manoeuvre 2. Le pivotement du levier de manoeuvre 2 autour de l'axe 3 de sa position basse inactive à sa position haute de serrage du frein s'accompagne, par l'intermédiaire de l'axe 19 en butée contre le fond 21 de la lumière 20, du pivotement concomitant du levier de traction 4 vers sa position active de serrage du frein à laquelle le levier de traction 4 est immobilisé, après relachement du bouton de déclenchement 15, par le cliquet d'arrêt 5 qui est ainsi également entraîné par le levier de manoeuvre 2 par l'intermédiaire de son axe de support 19. Le levier de manoeuvre 2 est maintenu en position haute de serrage du frein de la figure 2 par l'extrémité en forme de doigt 11 de la tige 13 poussée par le ressort 17 dans l'encoche 16 du cliquet d'arrêt 5, l'axe 19 étant maintenu en butée contre le fond 21 de la lumière 20.

Le desserrage du frein s'effectue normalement en poussant suivant la flèche F1 la tige 13 à l'aide du bouton de déclenchement 15 de façon à désengager le cliquet d'arrêt 5 du secteur denté fixe 7 et permettre le pivotement concomitant des deux leviers de manoeuvre 2 et de traction 4 autour de l'axe 3 suivant le sens contraire des aiguilles d'une montre.

Pour abaisser le levier de manoeuvre 2 à partir de sa position haute en figure 2 sans desserrage du frein, il suffit de tirer sur le bouton 15 suivant la flèche F2 (figure 3) jusqu'à ce que l'épaulement 25 vienne en appui sur la butée 23 de façon à désengager complètement le doigt 11 de l'encoche 16 du cliquet 5. Le levier de manoeuvre 2 est ainsi désolidarisé du levier de traction 4 et peut pivoter autour de l'axe 3 relativement au levier de traction 4 grâce à la lumière 20 jusqu'à une position rabattue sensiblement horizontale (figure 4). A cette position, le cliquet d'arrêt 5 bloque toujours le levier de traction 4 à sa position de serrage du frein. On remarquera qu'en position rabattue du levier de manoeuvre 2, le ressort 17 amène l'épaulement 24 de la tige 13 en appui contre la butée 23. Le levier de manoeuvre 2 peut être ramené à sa position haute de la figure 2 par une simple action sur celui-ci dans le sens des aiguilles d'une montre (sens du freinage) jusqu'à ce que l'axe 19 revienne en butée dans le fond 21 de la lumière 20 et que l'extrémité en forme de doigt 11 revienne dans l'encoche 16 sous l'action de poussée du ressort 17.

Ainsi, par le dispositif de commande à main de l'invention, le conducteur peut actionner normalement le frein en laissant le levier de manoeuvre en position haute, preuve visible de serrage du frein, et n'abaisser le levier, frein serré, qu'exceptionnellement, par exemple pour permettre le pivotement d'un siège adjacent au levier.

## Revendications

1. Dispositif de commande à main d'un frein de stationnement d'un véhicule, du type comprenant un levier de manoeuvre (2) pivotant d'une position basse à une position haute en entraînant, par des moyens de butée (19, 21), un levier de traction (4) lié au frein d'une position de repos à une position active de serrage du frein où le levier de traction (4) est immobilisé par un cliquet d'arrêt (5) coopérant avec un secteur denté fixe (7), le levier de manoeuvre (2) étant alors propre à reprendre sa position basse par écartement des moyens de butée (19, 21), le desserrage du frein s'obtenant en amenant le levier de manoeuvre (2) à sa position haute et en exerçant une poussée sur une tige (13) coulissant dans le levier de manoeuvre (2) de façon à désengager le cliquet d'arrêt (5) du secteur denté fixe (7), caractérisé en ce qu'il comprend des moyens dégageables (11, 16) de solidarisation des deux leviers de manoeuvre (2) et de traction (4), propres à maintenir en contact lesdits moyens de butée (19, 21) et en ce que les moyens dégageables comprennent un doigt (11) monté coulissant dans le levier de manoeuvre (2) et une encoche (16) réalisée dans le cliquet d'arrêt (5) et dans laquelle s'engage le doigt coulissant (11), qui est solidaire de la tige coulissante (13) manoeuvrable par traction sur un bouton externe (15) de façon à déplacer ladite tige (13) à l'encontre de la force de rappel d'un ressort (17) et désengager le doigt coulissant (11) de l'encoche (16) du cliquet d'arrêt (5), permettant ainsi au levier de manoeuvre (2) d'être rabattu sans desserrage du frein.

2. Dispositif selon la revendication 1, caractérisé en ce que les moyens de butée précités comprennent un axe (19) solidaire du levier de traction (4) et portant le cliquet d'arrêt (5) et une lumière curviligne (20) du levier de manoeuvre (2) traversée par l'axe de butée (19) de façon que ce dernier soit en butée sur une extrémité ou fond (21) de la lumière (20) lors du pivotement du levier de manoeuvre (2) vers sa position haute précitée, la lumière (20) permettant de plus le pivotement du levier de manoeuvre (2) relativement au levier de traction (4) vers sa position rabattue lorsque le levier de traction (4) est en position active de serrage du frein.

3. Dispositif selon la revendication 2, caractérisé en ce que la tige coulissante (13) précitée comprend un épaulement (24) venant en appui sur une butée fixe (23) du levier de manoeuvre (2) sous l'action du ressort de rappel (17) précité en position de serrage du frein et en position rabattue du levier de manoeuvre (2).

4. Dispositif selon la revendication 3, caractérisé en ce qu'il comprend une seconde butée (22) opposée à la butée (23) précitée et assurant avec celle-ci le guidage de la tige (13) et l'engagement de son extrémité formant doigt (11) dans l'encoche (16).

5. Dispositif selon l'une des revendications précédentes, caractérisé en ce que les deux leviers de manoeuvre (2) et de traction (4) pivotent autour d'un axe fixe commun (3).

## Claims

1. Device for the hand-operated control of a parking brake of a vehicle, of the type comprising an actuating lever (2) pivoting from a lower position to an upper position while carrying along, by abutment means (19, 21), a pull lever (4) connected to the brake, from a rest position to an operative brake applying position wherein the pull lever (4) is held against motion by a stop pawl (5) co-operating with a stationary toothed sector (7), the actuating lever (2) being then adapted to reassume its lower position by the abutment means (19, 21) becoming spaced apart, the release of the brake being obtained by bringing the actuating lever (2) to its upper position and by exerting a push upon a rod (13) sliding within the actuating lever (2) so as to disengage the stop pawl (5) from the stationary toothed sector (7), characterized in that it comprises disengageable means (11, 16) for making both actuating and pull levers (2) and (4) fast to each other, adapted to hold the said abutment means (19, 21) in contact and in that the disengageable means comprise a finger (11) slidably mounted within the actuating lever (2) and a notch (16) provided in the stop pawl (5) and which is entered by the sliding finger (11) which is made fast to the sliding rod (13) operable by pulling upon an external knob (15) so as to displace the said rod (13) against the drawback force of a spring (17) and to disengage the sliding finger (11) from the notch (16) of the stop pawl (5) thus allowing the actuating lever (2) to be brought down without any release of the brake.

2. Device according to claim 1, characterized in that the aforesaid abutment means comprise a pin (19) made fast to the pull lever (4) and carrying the stop pawl (5) and a curvilinear elongated opening (20) of the actuating lever (2) through which the abutment pin (19) extends so that the latter be in abutment upon one end or bottom (21) of the elongated opening (20) during the pivoting of the actuating lever (2) towards its aforesaid upper position, the elongated opening (20) moreover permitting the pivoting of the actuating lever (2) in relation to the pull lever (4) towards its downwards moved position when the pull lever (4) is in the operative brake applying position.

3. Device according to claim 2, characterized in that the aforesaid sliding rod (13) comprises a shoulder (24) caused to bear upon a stationary stop (23) of the actuating lever (2) under the action of the aforesaid drawback spring (17) in the brake applying position and in the downwards moved position of the actuating lever (2).

4. Device according to claim 3, characterized in that it comprises a second stop (22) opposite to the aforesaid stop (23) and ensuring together with the latter the guiding of the rod (13) and the engagement of its end forming a finger (11) with the notch (16).

5. Device according to one of the foregoing claims, characterized in that both actuating and pull levers (2) and (4) are pivoting about a common axis (3).

## Patentansprüche

1. Vorrichtung zur Handbetätigung einer feststellbaren Parkbremse eines Fahrzeuges, derjenigen Gattung mit einem Betätigungshebel (2), der von einer niedrigen Stellung zu einer hohen Stellung schwenkt, indem er durch Anschlagmittel (19, 21) einen mit der Bremse verbundenen Zughebel (4) von einer Ruhestellung bis zu einer wirksamen Bremsanziehungsstellung, wo der Zughebel (4) durch eine mit einem ortsfesten Zahnsegment (7) zusammenwirkende Sperrklinke (5) festgehalten wird, mitgenommen wird, wobei der Betätigungshebel (2) dann geeignet ist, seine niedrige Stellung durch Auseinandergehen der Anschlagmittel (19, 21) wieder einzunehmen, wobei das Lockern der Bremse dadurch erzielt wird, dass man den Betätigungshebel (2) in seine hohe Stellung bringt und einen Schub auf eine in dem Betätigungshebel (2) gleitende Stange (13) ausübt, um die Sperrklinke (5) ausser Eingriff mit dem ortsfesten Zahnsegment (7) zu bringen, dadurch gekennzeichnet, dass sie freisetztbare Mittel (11,16) zur festen Verbindung der beiden Betätigungs- und Zughebel (2) und (4) aufweist, die geeignet sind, die besagten Anschlagmittel (19, 21) in Berührung zu halten und dass die freisetzbare Mittel einen in dem Betätigungshebel (2) gleitbar angeordneten Finger (11) und eine in der Sperrklinke (5) gebildete Kerbe (16), in welche der gleitbare Finger (11) eingreift, umfassen, welcher mit der durch Zug an einem äusseren Knopf (15) betätigbaren gleitbaren Stange (13) fest verbunden ist, um die besagte Stange (13) entgegen der Rückstellkraft einer Feder (17) zu verschieben und den gleitbaren Finger (11) aus der Kerbe (16) der Sperrklinke (5) freizusetzen, wodurch dem Betätigungshebel (2) gestattet wird, ohne Bremslockerung herabbewegt zu werden.

2. Vorrichtung nach Anspruch 1, dadurch gekennzeichnet, dass die vorgenannten Anschlagmittel einen mit dem Zughebel (4) fest verbundenen und die Sperrklinke (5) tragenden Zapfen (19) und ein durch den Anschlagzapfen (19) durchsetztes krummliniges Langloch (20) des Betätigungshebels (2) aufweisen, damit der Anschlagzapfen an einem Ende bzw. Boden (21) des Langloches (20), während der Schwenkung des Betätigugungshebels (2) zu seiner vorgenannten hohen Stellung hin zum Anschlag kommt, wobei das Langloch (20) ausserdem das Schwenken des Betätigungshebels (2) in bezug auf den Zughebel (4) zu seiner herabbewegten Stellung hin gestattet, wenn der Zughebel (4) in der wirksamen Bremsanziehungsstellung ist.

3. Vorrichtung nach Anspruch 2, dadurch gekennzeichnet, dass die vorgenannte gleitbare Stange (13) eine Schulter (24) aufweist, die zur Abstützung an einem ortsfesten Anschlag (23) des Betätigungshebels (2) unter der Wirkung der vorgenannten Rückstellfeder (17) in der Bremsanziehungsstellung und in der herabbewegten Stellung des Betätigungshebels (2) kommt.

4. Vorrichtung nach Anspruch 3, dadurch gekennzeichnet, dass sie einen zweiten Anschlag (22) aufweist, der dem vorgenannten Anschlag (23) entgegengesetzt ist und mit diesem die Führung der Stange (13) und das Einführen ihres den Finger (11) bildenden Endes in die Kerbe (16) gewährleistet.

5. Vorrichtung nach einem der vorangehenden Ansprüche, dadurch gekennzeichnet, dass der Betätigungshebel (2) und der Zughebel (4) um eine gemeinsame ortsfeste Achse (3) schwenken.
